# EUROPÄISCHE PATENTSCHRIFT

(11) **EP 2 447 419 B1**
(45) Veröffentlichungstag und Bekanntmachung des Hinweises auf die Patenterteilung: **08.06.2016**
(21) Anmeldenummer: 10188957.4
(22) Anmeldetag: 26.10.2010
(51) Int. Cl.: E01H 1/08, A01D 43/077, A01D 42/06

(54) **Bodenreinigungsmaschine mit Kupplungseinrichtung**
Floor cleaning machine with coupling device
Machine de nettoyage du sol dotée d'un dispositif d'embrayage

(43) Veröffentlichungstag der Anmeldung: 02.05.2012
(73) Patentinhaber: Hako GmbH, 23843 Bad Oldesloe (DE)
(72) Erfinder: Maut, Rolf-Jürgen, 13129 Berlin (DE); Kuhn, Holger, 14532 Stahnsdorf (DE)
(74) Vertreter: Uexküll & Stolberg

(56) Entgegenhaltungen:
- EP-A2- 2 168 424
- FR-A1- 2 949 795
- US-A1- 2002 138 939

## Beschreibung

Die vorliegende Erfindung betrifft eine Bodenreinigungsmaschine mit einem Fahrgestell mit Rädern zum Fahren über eine zu reinigende Bodenfläche, mit einer Absaugeinrichtung mit einem Ansaugstutzen, der an der Seite des Fahrgestells angeordnet ist, die zu der zu bearbeitenden Bodenfläche weist, und mit einer Kupplungseinrichtung zum Anschluss einer Zusatzeinrichtung an die Bodenreinigungsmaschine, wobei die Zusatzeinrichtung eine im Betrieb parallel zu der zu bearbeitenden Bodenfläche verlaufenden Kupplungsplatte aufweist, wobei die Kupplungsplatte eine Anschlussöffnung aufweist und wobei die Zusatzeinrichtung ausgestaltet ist, in einer Bewegungsrichtung über die zu bearbeitende Bodenfläche bewegt zu werden, wobei die Kupplungseinrichtung ein gegenüber dem Fahrgestell höhenverstellbares Kupplungselement aufweist, wobei das Kupplungselement als eine im Wesentlichen parallel zu der durch die Räder definierten Ebene verlaufende Anschlussplatte ausgebildet ist, wobei die Anschlussplatte eine Durchgangsöffnung aufweist, von der sich der Ansaugstutzen zum Fahrgestell hin erstreckt. Ferner betrifft die vorliegende Erfindung eine Zusatzeinrichtung für eine Bodenreinigungsmaschine mit einer im Betrieb parallel zu einer zu bearbeitenden Bodenfläche verlaufenden Kupplungsplatte, wobei die Kupplungsplatte eine Anschlussöffnung aufweist, wobei die Bodenreinigungsmaschine mit einem Fahrgestell mit Rädern eine Kupplungseinrichtung zum Anschluss der Zusatzeinrichtung an die Bodenreinigungsmaschine aufweist, wobei die Kupplungseinrichtung ein gegenüber dem Fahrgestell höhenverstellbares Kupplungselement aufweist, wobei das Kupplungselement als eine im Wesentlichen parallel zu der durch die Räder definierten Ebene verlaufende Anschlussplatte ausgebildet ist, wobei die Anschlussplatte eine Durchgangsöffnung aufweist, von der sich der Ansaugstutzen zum Fahrgestell hin erstreckt.

Aus dem Stand der Technik sind Bodenreinigungsmaschinen bzw. Mehrzweckfahrzeuge bekannt, die eine Absaugeinrichtung aufweisen, mit deren Hilfe beispielsweise zusammengekehrter Schmutz oder mit Hilfe eines Mähwerks geschnittenes Gras abgesaugt werden kann. Dabei sind für derartige Fahrzeuge beispielsweise als Kehreinrichtung, als Saugfuß oder Mäheinrichtung ausgestaltete Zusatzeinrichtungen vorgesehen, die wechselbar an dem Fahrzeug befestigt werden können. Derartige Maschinen oder Fahrzeuge können somit für eine Vielzahl von Aufgaben eingesetzt werden.

Aus der U.S. 2002/138939 ist eine Bodenreinigungsmaschine mit zwei Bürsten bekannt, die eine Zusatzeinrichtung in Form einer Absaugeinrichtung aufweist. Diese Absaugeinrichtung ist mit einem Ansaugstutzen über eine höhenverstellbare Kupplungseinrichtung mit der Bodenreinigungsmaschine verbunden.

Allerdings taucht bei derartigen Fahrzeugen oder Maschinen das Problem auf, dass der Aufwand für den Umbau erheblich ist, wenn eine Zusatzeinrichtung gegen eine andere ausgetauscht werden soll. Insbesondere hat es sich als problematisch erwiesen, dass jeweils die Verbindung zwischen dem Ansaugstutzen, der an dem Fahrzeug vorgesehen ist und mit der Absaugeinrichtung verbunden ist, und dem entsprechenden Anschluss an der Zusatzeinrichtung zuverlässig hergestellt werden muss. Dies bereitet oft Probleme und ist zeitaufwendig. Dabei ist es insbesondere ein Problem, dass diese Verbindung an der Unterseite des Fahrzeugs hergestellt werden muss, die für einen Bediener nur schwer zugänglich ist.

Außerdem ist es wünschenswert, auch die weiteren Versorgungsanschlüsse wie eine Frischwasserdüse ebenfalls so anzubringen, dass die Verbindung mit einer Zusatzeinrichtung leicht erfolgen kann.

Ausgehend davon ist es daher die Aufgabe der vorliegenden Erfindung, eine Bodenreinigungsmaschine bzw. eine dafür vorgesehene Zusatzeinrichtung bereitzustellen, die eine zuverlässige aber auch einfache Montage der Zusatzeinrichtung an der Bodenreinigungsmaschine erlaubt.

Diese Aufgabe wird gemäß einem ersten Aspekt der vorliegenden Erfindung durch eine Bodenreinigungsmaschine gelöst, bei der an den in Fahrtrichtung der Bodenreinigungsmaschine gesehen seitlichen Kanten der Anschlussplatte Eingriffselemente zum Eingriff mit der Kupplungsplatte der Zusatzeinrichtung vorgesehen sind und bei der die Zusatzeinrichtung mit der Bodenreinigungsmaschine derart gekuppelt werden kann, dass die Kupplungsplatte auf die Anschlussplatte aufgeschoben wird, wobei dann die Durchgangsöffnung und die Anschlussöffnung zueinander ausgerichtet sind, so dass bereits durch das Aufschieben die Zusatzeinrichtung direkt mit dem Ansaugstutzen verbunden wird.

Bei einer derartigen Ausgestaltung der Kupplungseinrichtung ist es möglich, dass eine Zusatzeinrichtung, die eine an die Anschlussplatte angepasste Kupplungsplatte aufweist, durch einfaches Aufschieben auf die Anschlussplatte angekoppelt werden kann. Dabei wird dann der Saugluftstrom durch die in der Anschlussplatte vorgesehene Durchgangsöffnung geführt, und es ist kein weiterer Vorgang nötig, um eine Verbindung zwischen dem Ansaugstutzen und einem entsprechenden Element an der Zusatzeinrichtung herzustellen.

Des Weiteren bringt die erfindungsgemäße Ausgestaltung den Vorteil mit sich, dass eine Vielzahl von Zusatzeinrichtungen jeweils mit einer an die Anschlussplatte angepassten Kupplungsplatte versehen werden können, so dass der Vorgang des Anschließens immer einheitlich vonstatten gehen kann. Schließlich wird durch die Anschlussplatte die Möglichkeit geschaffen, alle Versorgungsanschlüsse für Zusatzeinrichtungen an einem einzelnen Element anzubringen. Damit tritt nicht das Problem auf, dass fahrzeugseitige Anschlüsse quasi "in der Luft hängen", wenn sie von einer bestimmten Zusatzeinrichtung nicht benötigt werden.

In einer bevorzugten Ausgestaltung verringert sich die Abmessung der Anschlussplatte in Querrichtung vom in Fahrtrichtung der Bodenreinigungsmaschine gesehen vorderen Ende der Anschlussplatte nach hinten. Dadurch kann die Zusatzeinrichtung in einfacher Weise durch Aufschieben entlang eines nur kurzen Weges auf die Anschlussplatte angeschlossen werden, wobei die Zusatzeinrichtung selbsttätig zu der Bodenreinigungsmaschine ausgerichtet wird. Außerdem können bei einer derartigen Anordnung die Eingriffselemente einfach als Winkel, entweder an der Anschlussplatte oder an der Kupplungsplatte, ausgestaltet werden.

Weiter bevorzugt kann sich die Abmessung der Anschlussplatte in Querrichtung vom vorderen Ende der Anschlussplatte zunächst gradlinig verringern, und es kann sich daran ein Abschnitt mit im Wesentlichen konstanter Breite anschließen.

Ferner können in einem bevorzugten Ausführungsbeispiel an den zur Seite weisenden Kanten der Anschlussplatte die Eingriffselemente vorgesehen sein, die als Kupplungsvorsprünge ausgebildet sein können.

Des Weiteren ist es bevorzugt, wenn die Kupplungseinrichtung so ausgestaltet ist, dass die Anschlussplatte derart relativ zum Fahrgestell in der Höhe verfahren werden kann, dass sie unabhängig von der eingestellten Höhe parallel zu der durch die Auflageflächen der Räder definierten Ebene verläuft. Bei einer solchen Ausgestaltung ist sichergestellt, dass Zusatzeinrichtung und Anschlussplatte unabhängig von der eingestellten Höhe korrekt ausgerichtet sind, also verschiedene Zusatzeinrichtungen mit unterschiedlicher Bauhöhe gemessen von der zu bearbeitenden Fläche in jedem Fall aufgeschoben werden können.

Um einen solchen Aufbau der Kupplungseinrichtung in einfacher Weise zu verwirklichen, ist es weiter bevorzugt, wenn die Kupplungseinrichtung wenigstens zwei Paare parallel zueinander und in einer Richtung senkrecht zu der Ebene, die durch die Auflageflächen der Räder definiert wird, versetzt angeordneter Streben aufweist, deren eines Ende mit dem Fahrgestell und deren anderes Ende mit der Anschlussplatte schwenkbar verbunden ist. Eine derartige Parallellenkeranordnung stellt in einfacher Weise sicher, dass die Anschlussplatte immer parallel zur Bodenfläche verläuft.

In diesem Zusammenhang ist es bevorzugt, wenn die Kupplungseinrichtung Verriegelungsmittel aufweist, sodass die Anschlussplatte in einer Stellung arretiert werden kann, in der die Anschlussplatte einen maximalen Abstand zu der durch die Auflageflächen der Räder definierten Ebene hat. Dadurch wird ermöglicht, die Anschlussplatte dann in der obersten Stellung festzulegen, wenn es bei einer Zusatzeinrichtung nicht erforderlich ist, die Höhe der Anschlussplatte zu verstellen. Dies ist zum Beispiel bei einem Anschlussadapter für eine Mäheinrichtung der Fall.

Um sicherzustellen, dass der Ansaugstutzen mit der Saugvorrichtung unabhängig von der eingestellten Höhe der Anschlussplatte verbunden ist, ist es bevorzugt, eine flexible Absaugleitung zwischen dem Ansaugstutzen und der Absaugeinrichtung vorzusehen.

Schließlich kann in der Anschlussplatte eine Verriegelungseinrichtung vorgesehen sein, die einen senkrecht zu der Ebene der Anschlussplatte verschiebbaren Riegel aufweist. Dieser Riegel kann in eine entsprechende Aussparung in der Kupplungsplatte der Zusatzeinrichtung dann eingeschoben werden, wenn diese ihre Betriebsstellung eingenommen hat, also hinreichend weit auf die Anschlussplatte aufgeschoben worden ist. Dadurch kann verhindert werden, dass sich die Kupplungsplatte relativ zu der Anschlussplatte verschiebt.

Gemäß einem weiteren Aspekt der vorliegenden Erfindung wird die eingangs genannte Aufgabe durch eine Zusatzeinrichtung für eine Bodenreinigungsmaschine gelöst, die ausgestaltet ist, in einer Bewegungsrichtung über die zu bearbeitende Fläche bewegt zu werden, und bei der die Zusatzeinrichtung mit der Bodenreinigungsmaschine derart gekuppelt werden kann, dass die Kupplungsplatte auf die Anschlussplatte aufgeschoben wird, wobei dann die Durchgangsöffnung und die Anschlussöffnung zueinander ausgerichtet sind, so dass bereits durch das Aufschieben die Zusatzeinrichtung direkt mit dem Ansaugstutzen verbunden wird.

Eine derartige Zusatzeinrichtung kann in einfacher Weise mit einer zuvor beschriebenen Bodenreinigungsmaschine derart gekoppelt werden, dass die Kupplungsplatte auf die Anschlussplatte aufgeschoben wird, wobei dann die Durchgangs- und Anschlussöffnungen zueinander ausgerichtet sind, so dass bereits durch das Aufschieben die Zusatzeinrichtung direkt mit dem Ansaugstutzen verbunden wird.

Wie bereits im Zusammenhang mit der Bodenreinigungsmaschine erläutert, ist es auch hier bevorzugt, wenn sich die Kupplungsplatte in Bewegungsrichtung der Zusatzeinrichtung gesehen vom vorderen Ende nach hinten verjüngt. Dabei kann auch hier im vorderen Bereich ein Abschnitt mit sich gradlinig verringender Breite vorgesehen sein, an den sich ein Abschnitt mit im Wesentlichen konstanter Breite anschließt.

Um ein einfaches Aufschieben der Kupplungsplatte auf die Anschlussplatte zu ermöglichen, können an den seitlichen Kanten der Kupplungsplatte Verriegelungselemente in Form von Winkeln vorgesehen sein.

Schließlich kann die Kupplungsplatte eine Aussparung zum Eingriff mit einem senkrecht zur Ebene der Anschlussplatte verschiebbaren Riegel aufweisen, der an der Anschlussplatte vorgesehen ist, um zu verhindern, dass die Kupplungsplatte und die Anschlussplatte relativ zueinander verschoben werden können.

Schließlich wird die eingangs genannte Aufgabe noch durch ein System aus Bodenreinigungsmaschine und Zusatzeinrichtung gelöst, wobei ebenfalls die bereits genannten Vorteile erzielt werden.

Im Folgenden wird die vorliegende Erfindung anhand einer Zeichnung erläutert, die lediglich ein bevorzugtes Ausführungsbeispiel zeigt, wobei
- Fig. 1: eine Teilschnittansicht des Fahrgestells einer Bodenreinigungsmaschine mit einer Kupplungseinrichtung gemäß dem Ausführungsbeispiel der vorliegenden Erfindung zeigt,
- Fig. 2: die Kupplungseinrichtung aus Fig.1 in perspektivischer Darstellung zeigt,
- Fig. 3: eine Zusatzeinrichtung in Form eines Saugfußes in perspektivischer Darstellung zeigt,
- Fig. 4: die Zusatzeinrichtung in Form eines Saugfußes aus Fig. 3 in montierter Stellung am Fahrgestell zeigt,
- Fig. 5: eine Teilschnittansicht einer Bodenreinigungsmaschine mit einer Kupplungseinrichtung und einer Zusatzeinrichtung gemäß dem Ausführungsbeispiel aus Fig. 1 zeigt, wobei zusätzlich eine Kehreinrichtung montiert ist,
- Fig. 6: einen Saugfuß als Zusatzeinrichtung zum Anschluss an die Kupplungseinrichtung, die in Fig. 1 dargestellt ist, zeigt, wobei dieser Saugfuß sich seitlich erstreckende Arme aufweist,
- Fig. 7: eine Zusatzeinrichtung gemäß dem vorliegenden Ausführungsbeispiel für den Anschluss einer Mäheinrichtung zeigt und
- Fig. 8: eine Teilschnittansicht einer Bodenreinigungsmaschine ist, an die die Zusatzeinrichtung gemäß Fig. 7 zusammen mit einer Mäheinrichtung montiert ist.

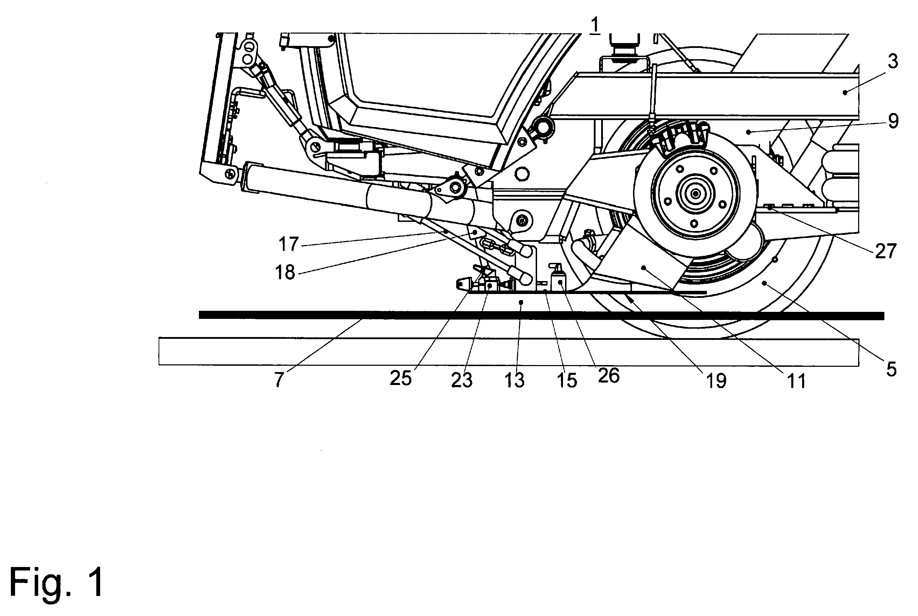

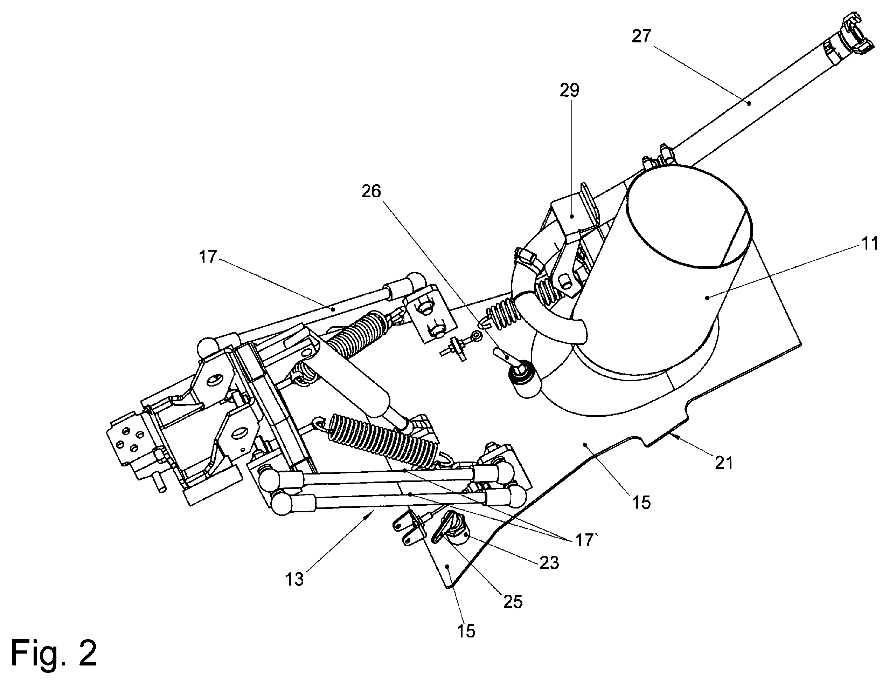

Wie in den Fig. 1 und 2 dargestellt, weist das Ausführungsbeispiel einer erfindungsgemäßen Bodenreinigungsmaschine 1 ein Fahrgestell 3 auf, an dem Räder 5 vorgesehen sind, so dass die Bodenreinigungsmaschine 1 über eine zu bearbeitende Bodenfläche 7 fahren kann. Des Weiteren ist aus Fig. 1 zu erkennen, dass in der Bodenreinigungsmaschine 1 eine nicht dargestellte Absaugeinrichtung mit einer Absaugleitung 9 vorgesehen ist, deren Ende mit einem Ansaugstutzen 11 versehen ist.

Wie aus den Fig. 1 und 2 weiter hervorgeht, ist der Ansaugstutzen 11 an einer Kupplungseinrichtung 13 zum Anschluss einer Zusatzeinrichtung vorgesehen, wobei diese ein Kupplungselement in Form einer Anschlussplatte 15 aufweist. Die Kupplungseinrichtung 13 ist derart ausgestaltet, dass die Anschlussplatte 15 so höhenverstellbar am Fahrgestell 3 gehaltert ist, dass die Anschlussplatte 15 unabhängig von der eingestellten Höhe parallel zu der durch die Auflageflächen der Räder 5 definierten Ebene, also die Bodenfläche 7, verläuft. Dazu weist die Kupplungseinrichtung 13 zwei Paare parallel zueinander und in einer Richtung senkrecht zu der Ebene, die durch die Auflageflächen der Räder 5 definiert wird, versetzt angeordneter Streben 17, 17' auf. Das eine Ende einer Strebe, 17, 17' ist mit dem Fahrgestell 3 schwenkbar verbunden, während das jeweils andere Ende der Streben 17, 17' mit der Anschlussplatte 15 schwenkbar verbunden ist.

Auf diese Weise wird eine Parallellenkeranordnung gebildet, die sicherstellt, dass die Anschlussplatte 15 unabhängig von der eingestellten Höhe parallel zu der Bodenfläche verläuft, wobei die Höhe selbst mit Hilfe einer Hubeinrichtung, die hier durch einen Hydraulikzylinder 18 gebildet ist, eingestellt werden kann. Im vorliegenden Fall ist der Hydraulikzylinder verriegelbar ausgestaltet, sodass Verriegelungsmittel vorgesehen sind, um die Anschlussplatte 15 in der Stellung zu verriegeln, in der sie den größten Abstand von der durch die Auflagefläche der Räder 5 definierten Ebene bzw. der Bodenfläche 7 hat.

Wie des Weiteren in den Fig. 1 und 2 erkennbar ist, weist die Anschlussplatte 15 eine Durchgangsöffnung 19 auf, so dass der Ansaugstutzen 11 derart an der Anschlussplatte 15 gehaltert werden kann, dass ein Saugstrom durch die Durchgangsöffnung 19 in die Absaugleitung 9 erzeugt werden kann. Dabei erstreckt sich der Ansaugstutzen 11 von der Anschlussplatte 15 zum Fahrgestell 3 hin, und die Absaugleitung 9 ist flexibel ausgestaltet, damit der Ansaugstutzen 11 unabhängig von der eingestellten Höhe der Anschlussplatte 15 mit der Absaugeinrichtung verbunden ist.

Schließlich sind an der Anschlussplatte 15 an den Kanten, die in Bewegungsrichtung der Bodenreinigungsmaschine 1 gesehen, seitlich liegen, Eingriffselemente in Form von Vorsprüngen 21 vorgesehen, so dass die Anschlussplatte 15 mit entsprechenden Kupplungselementen an einer Zusatzeinrichtung eingreifen kann. Außerdem ist noch eine Verriegelungseinrichtung 23 an der Kupplungseinrichtung 13 vorgsehen, die einen senkrecht zu der Ebene der Anschlussplatte 15 verschiebbaren Riegel 25 aufweist.

Um das Anschließen einer Zusatzeinrichtung zu vereinfachen, ist die Anschlussplatte 15 derart ausgestaltet, dass sich die Breite des in Fahrtrichtung der Bodenreinigungsmaschine 1 gesehen vorderen Bereichs 15' zunächst gradlinig verringert, wobei sich daran ein Abschnitt mit im Wesentlichen konstanter Breite anschließt. Bei dem vorliegenden Ausführungsbeispiel ist durch diese spezielle Geometrie verwirklicht worden, dass sich die Abmessung der Anschlussplatte 15 in Querrichtung vom vorderen Ende nach hinten verringert.

Aus den Fig. 1 und 2 ist außerdem zu erkennen, dass an der Anschlussplatte 15 eine Frischwasserdüse 26 vorgesehen ist, sodass Frischwasser in den Saugluftstrom eingespritzt werden kann. Darüber hinaus ist der Ansaugstutzen 11 mit einer Rückführleitung 27 aus elastischem Material verbunden, wobei deren Querschnitt mit einer Verschlussvorrichtung 29 verringert werden kann. Die Rückführleitung 27 dient dazu, dass in der Absaugeinrichtung zurückgewonnenes Wasser in die Absaugleitung 9 eingeleitet werden kann, um Staub in dem Kehrgut zu binden.

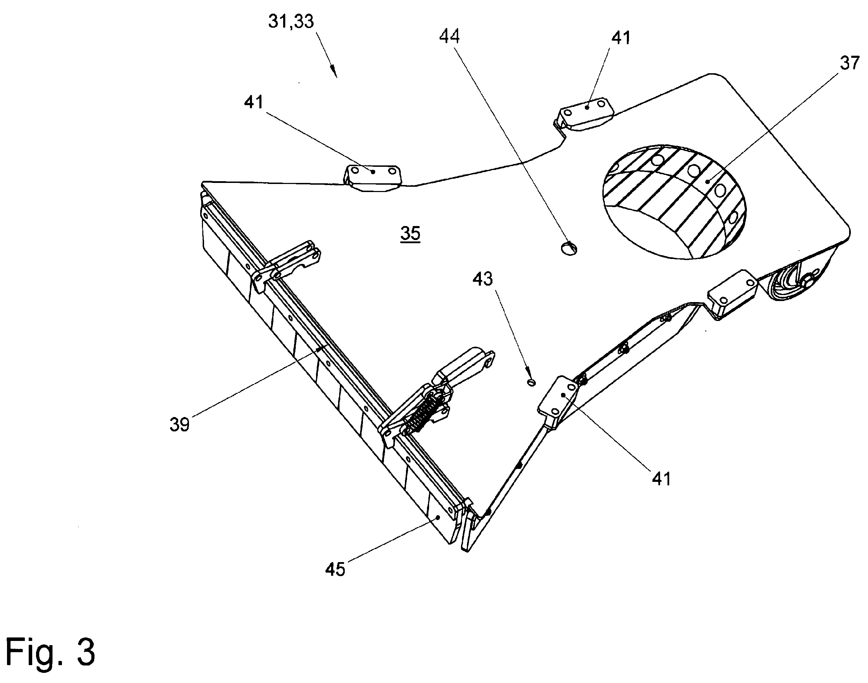

In Fig. 3 ist eine Zusatzeinrichtung 31 in Form eines Saugfußes 33 dargestellt. Der Saugfuß 33 weist eine Kupplungsplatte 35 mit einer Anschlussöffnung 37 auf, wobei die Anschlussöffnung 37 derart in der Kupplungsplatte 35 angeordnet ist, dass die Anschlussöffnung 37 der Durchgangsöffnung 19 in der Anschlussplatte 15 gegenüberliegt, wenn die Kupplungsplatte 35 an der Anschlussplatte 15 montiert und verriegelt ist.

Auch bei dem Saugfuß 33 ist die Kupplungsplatte 35 in der Weise ausgestaltet, dass sich die Abmessung in Querrichtung vom vorderen Ende 39 nach hinten verringert, wobei auch hier ein Abschnitt vorgesehen ist, in dem sich die Breite gradlinig verringert, an den sich ein Abschnitt mit im Wesentlichen konstanter Breite anschließt.

Außerdem sind an den nach außen weisenden Kanten der Kupplungsplatte 35, die parallel zu der Bewegungsrichtung verlaufen, in der der Saugfuß 33 über eine zu bearbeitende Bodenfläche 7 bewegt wird, Kupplungselemente in Form von Winkeln 41 angebracht, die die Anschlussplatte 15 hintergreifen können, um den Saugfuß 33 daran zu haltern.

In Fig. 3 ist auch zu erkennen, dass die Kupplungsplatte 35 eine Aussparung 43 aufweist, die ausgestaltet ist, den Riegel 25, der an der Anschlussplatte 15 vorgesehen ist, aufzunehmen. Schließlich ist in der Kupplungsplatte 35 noch eine Einspritzöffnung 44 vorgesehen, die im gekoppelten Zustand zu der Frischwasserdüse 26 in der Anschlussplatte 15 ausgerichtet ist.

Aus Fig. 3 ist schließlich noch zu erkennen, dass an dem nach vorne weisenden Ende 39 des Saugfußes 33 eine Klappe 45 schwenkbar angebracht ist, die über eine nicht dargestellte Bowdenzuganordnung bewegt werden kann, so dass ein Benutzer in dem Fall, dass sich große Gegenstände vor dem Saugfuß 33 befinden, diese Klappe 45 öffnen kann, um diese Gegenstände ebenfalls einzusaugen. In den seitlichen Bereichen des Saugfußes 33 sind ferner Laschen 47 vorgesehen, die sich bis zu der Bodenfläche erstrecken, um einen Bereich im Saugfuß zu umgeben, in dem durch die Absaugeinrichtung ein Unterdruck erzeugt wird.

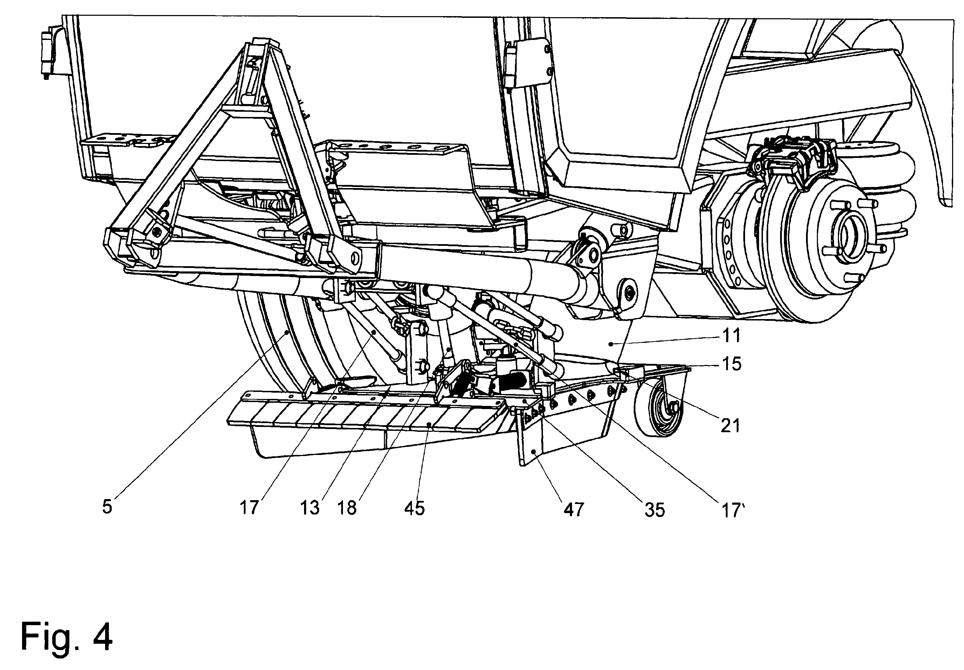

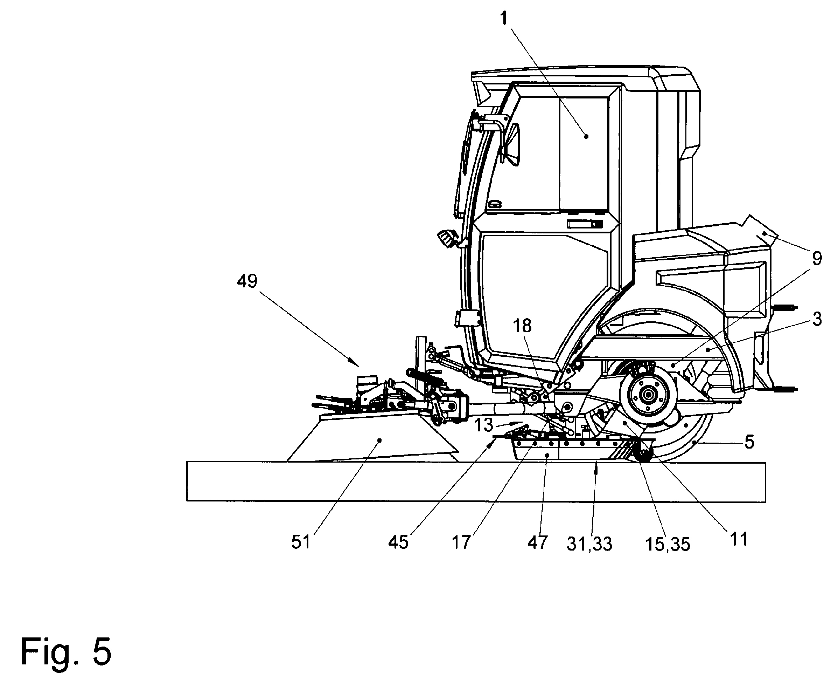

Aus den Fig. 4 und 5 ergibt sich, wie die Zusatzeinrichtung 31 in Form des Saugfußes 33 an der Bodenreinigungsmaschine 1 mit der Kupplungseinrichtung 13 montiert wird.

Durch die sich von vorne nach hinten in Querrichtung verringernden Abmessungen der Anschlussplatte 15 und der Kupplungsplatte 35 wird ermöglicht, dass der Saugfuß in einfacher Weise von hinten auf die Anschlussplatte 15 aufgeschoben werden kann, wobei nur eine kurze Schiebestrecke erforderlich ist.

Dabei ist insbesondere zu erkennen, dass die Kupplungselemente in Form von Winkeln 41 an der Kupplungsplatte 35 mit der Anschlussplatte 15 eingreifen, wobei die Vorsprünge 21 im Bereich der seitlichen Kanten hintergriffen werden.

Wenn die Endposition erreicht ist, in der der Riegel 25 in die Aussparung 43 eingreift, sind die Anschlussöffnung 37 und die Durchgangsöffnung 19 zueinander ausgerichtet, so dass ein Saugluftstrom durch die Anschlussplatte 15 und die Kupplungsplatte 35 hindurch in die Absaugleitung 9 durch die Absaugeinrichtung erzeugt werden kann. Außerdem ist die Frischwasserdüse 26 mit der Einspritzöffnung 44 ausgerichtet. Somit ist das Anschließen der Zusatzeinrichtung 31 in Form eines Saugfußes 33 vergleichsweise einfach, und es ist nicht erforderlich, neben der Halterung des Saugfußes 33 selbst noch die Absaugleitung 9 entsprechend zu verbinden.

Außerdem ist aus Fig. 5 zu erkennen, dass in Fahrtrichtung gesehen vor dem Saugfuß 33 eine Kehreinrichtung 49 mit angetriebenem Besen 51 angebracht werden kann.

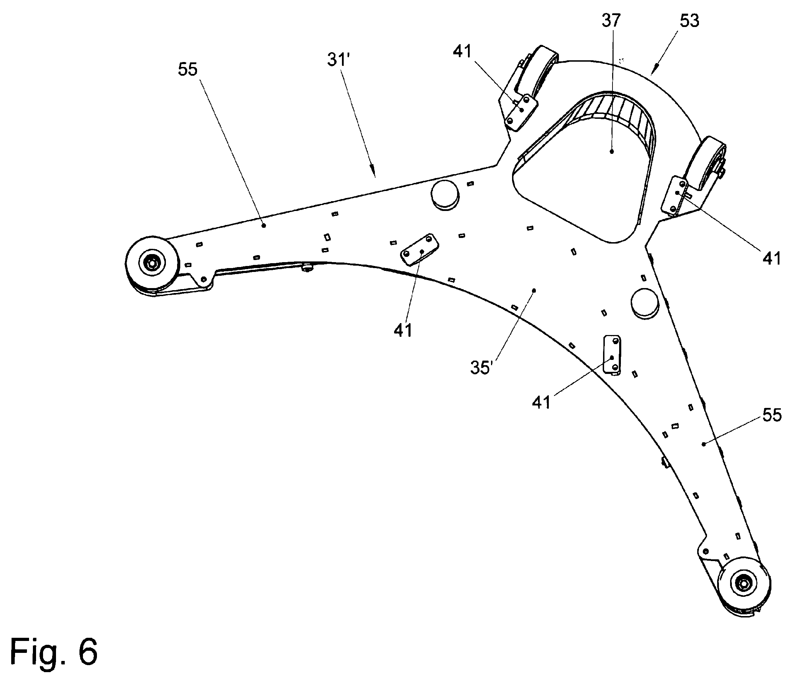

In Fig. 6 ist eine alternative Form einer Zusatzeinrichtung 31' in Form eines Saugfußes 53 mit sich in Querrichtung nach außen erstreckenden Armen 55 gezeigt, der ebenfalls eine Anschlussplatte 35' mit Winkeln 41 aufweist, wobei die Anschlussplatte 35 im vorliegenden Fall einstückig mit den Armen 55 ausgebildet ist. Auch dieser Saugfuß 53 kann in einfacher Weise auf die an der Bodenreinigungsmaschine 1 vorgesehene höhenverstellbare Anschlussplatte 15 aufgeschoben werden, wobei die hier ebenfalls vorgesehene Anschlussöffnung 37 sicherstellt, dass auch hier ein Luftstrom durch die Öffnungen 19, 37 hindurch in die Absaugleitung 9 realisiert werden kann.

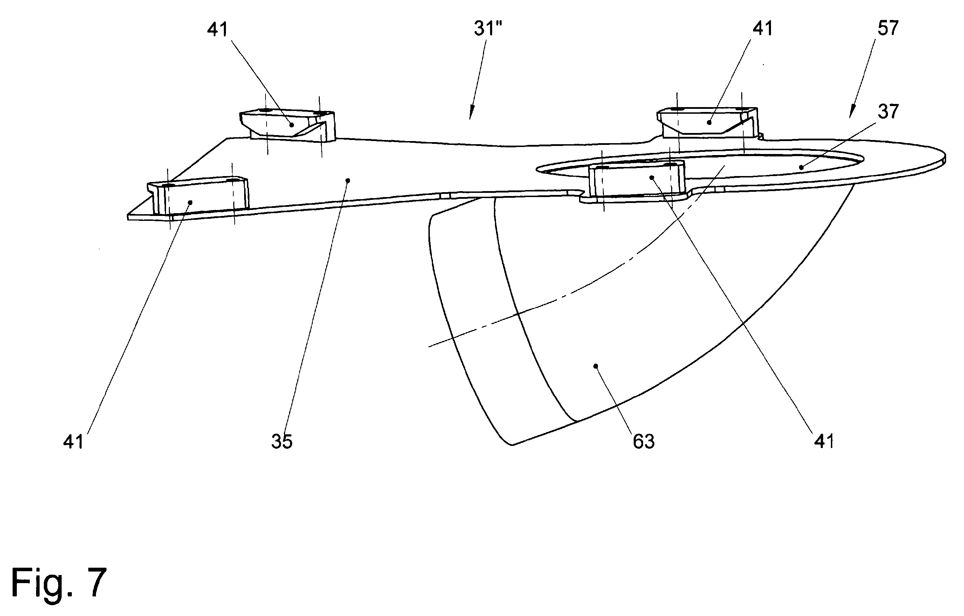

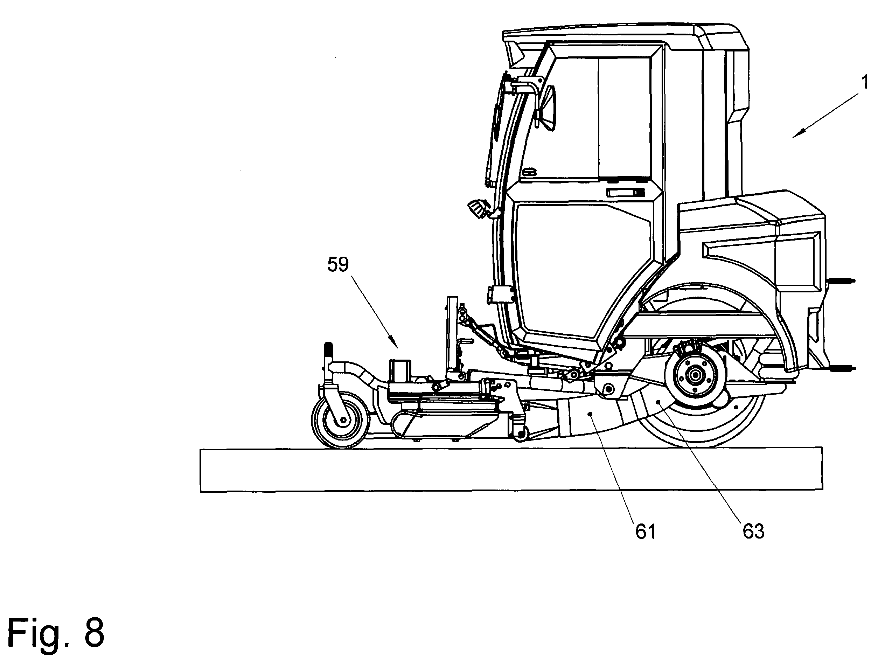

In den Fig. 7 und 8 ist schließlich eine weitere Zusatzeinrichtung 31" in Form eines Anschlussadapters 57 dargestellt, mit dem eine in Fig. 8 dargestellte Mäheinrichtung 59, die mit der Bodenreinigungsmaschine 1 gekoppelt ist, über eine flexible Leitung 61 mit der Absaugeinrichtung verbunden werden kann. Der Anschlussadapter 57 weist, wie die vorher beschriebenen Zusatzeinrichtungen 31, 31' auch, eine Kupplungsplatte 35 mit Winkeln 41 zum Eingriff mit der Anschlussplatte 15 auf. Des Weiteren ist wiederum eine Anschlussöffnung 37 vorgesehen, von der sich ein Verbindungsstutzen 63 weg von der Kupplungsplatte 35 erstreckt. An den Verbindungsstutzen 63 kann die Leitung 61 angeschlossen werden, so dass dann ein Saugluftstrom von der Mäheinrichtung 59 durch die Anschluss- und Kupplungsplatten 15, 35 und die Absaugleitung 9 in die Absaugeinrichtung, die in Fig. 8 ebenfalls nicht dargestellt ist, erreicht werden kann. Die Kupplungsplatte 35 des Anschlussadapters 57 weist keine Einspritzöffnung 44 auf, da hier während des Betriebs die Frischwasserdüse 26 nicht benötigt wird. Dennoch kann diese an der Anschlussplatte 15 verbleiben. Während des Betriebs wird die Anschlussplatte 15 mit dem Anschlussadapter 57 in der obersten Stellung, in der die Anschlussplatte 15 den größten Abstand zu der Bodenfläche 7 aufweist, mit Hilfe des Hydraulikzylinders 18 verriegelt, da hier aufgrund der flexiblen Leitung 61 eine Höhenverstellung der Anschlussplatte 15 nicht erforderlich ist.

Wie sich aus der vorstehenden Beschreibung des Ausführungsbeispiels der vorliegenden Erfindung ergibt, wird dadurch eine Bodenreinigungsmaschine, eine Zusatzeinrichtung bzw. ein System aus einer Bodenreinigungsmaschine und einer Vielzahl von Zusatzeinrichtungen bereitgestellt, wobei jeweils in einfacher Weise die Zusatzeinrichtung mit der Bodenreinigungsmaschine verbunden werden kann und dabei sofort sichergestellt ist, dass ein Absaugluftstrom in der gewünschten Weise realisiert wird, ohne dass die Ansaugstutzen separat verbunden werden muss. Außerdem ermöglicht die Anschlussplatte 15, dass daran weitere Versorgungsanschlüsse wie eine Frischwasserdüse 26 gehaltert werden können. Diese können dort immer verbleiben unabhängig davon, ob sie für die jeweilige Zusatzeinrichtung benötigt werden.

## Patentansprüche

1. Bodenreinigungsmaschine mit einem Fahrgestell (3) mit Rädern (5) zum Fahren über eine zu reinigende Bodenfläche (7),
mit einer Absaugeinrichtung mit einem Ansaugstutzen (11), der an der Seite des Fahrgestells (3) angeordnet ist, die zu der zu bearbeitenden Bodenfläche (7) weist, und
mit einer Kupplungseinrichtung (13) zum Anschluss einer Zusatzeinrichtung (31, 31', 31") an die Bodenreinigungsmaschine (1), wobei die Zusatzeinrichtung (31, 31', 31") eine im Betrieb parallel zu der zu bearbeitenden Bodenfläche verlaufenden Kupplungsplatte (35) aufweist, wobei die Kupplungsplatte (35) eine Anschlussöffnung (37) aufweist und wobei die Zusatzeinrichtung (31, 31', 31") ausgestaltet ist, in einer Bewegungsrichtung über die zu bearbeitende Bodenfläche bewegt zu werden,
wobei die Kupplungseinrichtung (13) ein gegenüber dem Fahrgestell (3) höhenverstellbares Kupplungselement aufweist,
wobei das Kupplungselement als eine im Wesentlichen parallel zu der durch die Räder (5) definierten Ebene verlaufende Anschlussplatte (15) ausgebildet ist,
wobei die Anschlussplatte (15) eine Durchgangsöffnung (19) aufweist, von der sich der Ansaugstutzen (11) zum Fahrgestell (3) hin erstreckt,
**dadurch gekennzeichnet,**
**dass** an den in Fahrtrichtung der Bodenreinigungsmaschine (1) gesehen seitlichen Kanten der Anschlussplatte (15) Eingriffselemente (21) zum Eingriff mit der Kupplungsplatte (35) der Zusatzeinrichtung (31, 31', 31") vorgesehen sind,
**dass** die Zusatzeinrichtung (31, 31', 31") mit der Bodenreinigungsmaschine (1) derart gekuppelt werden kann, dass die Kupplungsplatte (35) auf die Anschlussplatte (15) aufgeschoben wird, wobei dann die Durchgangsöffnung (19) und die Anschlussöffnung (37) zueinander ausgerichtet sind, so dass bereits durch das Aufschieben die Zusatzeinrichtung (31, 31', 31") direkt mit dem Ansaugstutzen (11) verbunden wird.

2. Bodenreinigungsmaschine nach Anspruch 1, wobei sich Abmessung der Anschlussplatte (15) in Querrichtung vom in Fahrtrichtung der Bodenreinigungsmaschine (1) gesehen vorderen Ende der Anschlussplatte (15) nach hinten verringert.

3. Bodenreinigungsmaschine nach Anspruch 2, wobei sich die Abmessung der Anschlussplatte (15) in Querrichtung vom vorderen Ende der Anschlussplatte (15) geradlinig verringert und sich daran ein Abschnitt mit im Wesentlichen konstanter Breite anschließt.

4. Bodenreinigungsmaschine nach Anspruch 2 oder 3, wobei an den nach außen weisenden Kanten der Anschlussplatte (15) Kupplungsvorsprünge (21) als Eingriffselemente vorgesehen sind.

5. Bodenreinigungsmaschine nach einem der Ansprüche 1 bis 4, wobei die Kupplungseinrichtung (13) so ausgestaltet ist, dass die Anschlussplatte (15) derart relativ zum Fahrgestell (3) in der Höhe verfahren werden kann, dass sie unabhängig von der eingestellten Höhe parallel zu der durch die Auflageflächen der Räder (5) definierten Ebene verläuft.

6. Bodenreinigungsmaschine nach Anspruch 5 wobei die Kupplungseinrichtung (13) wenigstens zwei Paare parallel zueinander und einer Richtung senkrecht zu der Ebene, die durch die Auflageflächen der Räder definiert wird, versetzt angeordneter Streben (17, 17') aufweist, deren eines Ende mit dem Fahrgestell (3) und deren anderes Ende mit der Anschlussplatte (15) schwenkbar verbunden ist.

7. Bodenreinigungsmaschine nach Anspruch 5 oder 6, wobei die Kupplungseinrichtung (13) Verriegelungsmittel aufweist, sodass die Anschlussplatte (15) in einer Stellung arretiert werden kann, in der die Anschlussplatte (15) einen maximalen Abstand zu der durch die Auflageflächen der Räder (5) definierten Ebene hat.

8. Bodenreinigungsmaschine nach einem der Ansprüche 1 bis 7, wobei der Ansaugstutzen (11) über eine flexible Absaugleitung (9) mit der Absaugeinrichtung verbunden ist.

9. Bodenreinigungsmaschine nach einem der Ansprüche 1 bis 4, wobei an der Anschlussplatte (15) eine Verriegelungseinrichtung (23) vorgesehen ist, die einen senkrecht zu der Ebene der Anschlussplatte (15) verschiebbaren Riegel (25) aufweist.

10. Zusatzeinrichtung für eine Bodenreinigungsmaschine nach einem der Ansprüche 1 bis 9, mit einer im Betrieb parallel zu einer zu bearbeitenden Bodenfläche verlaufenden Kupplungsplatte (35),
wobei die Zusatzeinrichtung (31, 31', 31") ausgestaltet ist, in einer Bewegungsrichtung über die zu bearbeitende Bodenfläche bewegt zu werden,
wobei die Kupplungsplatte (35) eine Anschlussöffnung (37) aufweist,
wobei die Bodenreinigungsmaschine (1) mit einem Fahrgestell (3) mit Rädern (5) zum Fahren über eine zu reinigende BodenfLäche ausgebildet ist und eine Kupplungseinrichtung (13) zum Anschluss der Zusatzeinrichtung (31, 31', 31") an die Bodenreinigungsmaschine (1) aufweist,
wobei die Kupplungseinrichtung (13) ein gegenüber dem Fahrgestell (3) höhenverstellbares Kupplungselement aufweist,
wobei das Kupplungselement als eine im Wesentlichen parallel zu der durch die Räder (5) definierten Ebene verlaufende Anschlussplatte (15) ausgebildet ist,
wobei die Anschlussplatte (15) eine Durchgangsöffnung (19) aufweist, von der sich der Ansaugstutzen (11) zum Fahrgestell (3) hin erstreckt
**dadurch gekennzeichnet,**
**dass** die Zusatzeinrichtung (31, 31', 31") mit der Bodenreinigungsmaschine (1) derart gekuppelt werden kann, dass die Kupplungsplatte (35) auf die Anschlussplatte (15) aufgeschoben wird, wobei dann die Durchgangsöffnung (19) und die Anschlussöffnung (37) zueinander ausgerichtet sind, so dass bereits durch das Aufschieben die Zusatzeinrichtung (31, 31', 31") direkt mit dem Ansaugstutzen (11) verbunden wird.

11. Zusatzeinrichtung nach Anspruch 10, wobei sich die Abmessung der Kupplungsplatte (35) quer zu der Bewegungsrichtung vom in Bewegungsrichtung gesehen vorderen Ende (39) der Kupplungsplatte (35) nach hinten verringert.

12. Zusatzeinrichtung nach Anspruch 11, wobei sich die Abmessung der Kupplungsplatte (35) in Querrichtung vom vorderen Ende der Kupplungsplatte (35) geradlinig verringert und sich daran ein Abschnitt mit im Wesentlichen konstanter Breite anschließt.

13. Zusatzeinrichtung nach einem der Ansprüche 10 bis 12, wobei die Kupplungsplatte (35) an den Kanten, die parallel zu der Bewegungsrichtung verlaufen, Kupplungselemente (41) zum Eingriff mit einer Anschlussplatte (15) an der Bodenreinigungsmaschine (1) aufweist.

14. Zusatzeinrichtung nach einem der Ansprüche 10 bis 13, wobei die Kupplungsplatte (35) eine Aussparung (43) zur Aufnahme eines Riegels (25) aufweist.

15. Bodenreinigungsmaschinensystem umfassend eine Bodenreinigungsmaschine nach einem der Ansprüche 1 bis 9 und eine Zusatzeinrichtung nach einem der Ansprüche 10 bis 14.

## Claims

1. Floor-cleaning machine comprising a carriage (3) with wheels (5) for driving over a floor surface (7) to be cleaned,
comprising a suction device with a suction point (11) which is arranged on the side of the carriage (3) which points towards the floor surface (7) to be worked on and
comprising a coupling device (13) for connecting an additional device (31, 31', 31 ") to the floor-cleaning machine (1), wherein the additional device (31, 31', 31 ") comprises a coupling plate (35) running during operation parallel to the floor surface to be worked on, wherein the coupling plate (35) comprises a connection opening (37) and wherein the additional device (31, 31', 31 ") is designed to be moved in one direction of movement over the floor surface to be worked on,
wherein the coupling device (13) comprises a coupling element which can be adjusted in height relative to the carriage (3),
wherein the coupling element is designed as a connection plate (15) running essentially parallel to the plane defined by the wheels (5), wherein the connection plate (15) has a through opening (19) from which the suction point (11) extends to the carriage (3),
**characterised in that**
on the lateral edges of the connection plate (15) as viewed in the direction of movement of the floor-cleaning machine (1) engaging elements (21) are provided for engaging with the coupling plate (35) of the additional device (31, 31', 31"),
**in that** the additional device (31, 31', 31") can be coupled to the floor cleaning machine (1) such that the coupling plate (35) is pushed onto the connection plate (15), wherein then the through opening (19) and the connection opening (37) are aligned to one another so that by pushing on the additional device (31, 31', 31") it is connected directly to the suction point (11).

2. Floor-cleaning machine according to claim 1, wherein the dimensions of the connection plate (15) decrease to the rear in transverse direction from the front end of the connection plate (15) as viewed in the driving direction of the floor-cleaning machine (1).

3. Floor-cleaning machine according to claim 2, wherein the dimensions of the connection plate (15) decrease linearly in transverse direction from the front end of the connection plate (15) and a section with an essentially constant width is connected thereto.

4. Floor-cleaning machine according to claim 2 or 3, wherein on the outwardly pointing edges of the connection plate (15) coupling projections (21) are provided as engaging elements.

5. Floor-cleaning machine according to any one of claims 1 to 4, wherein the coupling device (13) is designed so that the connection plate (15) can be moved relative to the carriage (3) vertically, such that it runs independently of the adjusted height parallel to the plane defined by the bearing surfaces of the wheels (5).

6. Floor-cleaning machine according to claim 5, wherein the coupling device (13) comprises at least two pairs of struts (17, 17') arranged offset parallel to one another and to a direction perpendicular to the plane which is defined by the bearing surfaces of the wheels, one end of the struts of which is connected pivotably to the carriage (3) and the other end of which is connected pivotably to the connection plate (15).

7. Floor-cleaning machine according to claim 5 or 6, wherein the coupling device (13) comprises locking means, so that the connection plate (15) can be locked in a position in which the connection plate (15) has a maximum distance from the plane defined by the bearing surfaces of the wheels (5).

8. Floor-cleaning machine according to any one of claims 1 to 7, wherein the suction point (11) is connected via a flexible suction line (9) to the suction device.

9. Floor-cleaning machine according to any one of claims 1 to 4, wherein on the connection plate (15) a locking device (23) is provided which has a bolt (25) displaceable perpendicular to the plane of the connection plate (15).

10. Additional device for a floor-cleaning machine according to any one of claims 1 to 9, with a coupling plate (35) running in operation parallel to a floor surface to be worked on,
wherein the additional device (31, 31', 31 ") is designed to be moved in a direction of movement over the floor surface to be worked on,
wherein the coupling plate (35) has a connection opening (37),
wherein the floor cleaning machine (1) is designed with a carriage (3) with wheels (5) for driving over a floor surface to be cleaned and comprises a coupling device (13) for connecting the additional device (31, 31', 31") to the floor-cleaning machine (1),
wherein the coupling device (13) has a coupling element which can be adjusted in height relative to the carriage (3),
wherein the coupling element is designed as a connection plate (15) running essentially parallel to the plane defined by the wheels (5), wherein the connection plate (15) has a through opening (19) from which the suction point (11) extends to the carriage (3),
**characterised in that**
the additional device (31, 31', 31") can be coupled to the floor cleaning machine (1) such that the coupling plate (35) is pushed onto the connection plate (15), wherein then the through opening (19) and the connection opening (37) are aligned relative to one another so that by pushing on the additional device (31, 31', 31") it is connected directly to the suction point (11).

11. Additional device according to claim 10, wherein the dimensions of the coupling plate (35) decrease to the rear perpendicular to the direction of movement from the front end (39) of the coupling plate (35) as viewed in the direction of movement.

12. Additional device according to claim 11, wherein the dimensions of the coupling plate (35) decrease linearly in transverse direction from the front end of the coupling plate (35) and a section with an essentially constant width connects to the latter.

13. Additional device according to any one of claims 10 to 12, wherein the coupling plate (35) on the edges, which run parallel to the direction of movement, comprises coupling elements (41) for engaging with a connection plate (15) on the floor-cleaning machine (1).

14. Additional device according to any one of claims 10 to 13, wherein the coupling plate (35) has a recess (43) for receiving a bolt (25).

15. Floor-cleaning machine system comprising a floor-cleaning machine according to any one of claims 1 to 9 and an additional device according to any one of claims 10 to 14.

## Revendications

1. Machine de nettoyage de sol avec un châssis (3) avec des roues (5) pour le déplacement au-dessus d'une surface de sol à nettoyer (7),
avec un dispositif d'aspiration avec un manchon d'aspiration (11), qui se trouve sur le côté du châssis (3), qui est orienté vers la surface du sol (7) à traiter et
avec un dispositif de couplage (13) pour le raccordement d'un dispositif supplémentaire (31, 31', 31") à la machine de nettoyage de sol (1), le dispositif supplémentaire (31, 31', 31") comprenant une plaque de couplage (35) s'étendant, lors du fonctionnement, parallèlement à la surface du sol à traiter, la plaque de couplage (35) comprenant une ouverture de raccordement (37) et le dispositif supplémentaire (31, 31', 31") étant conçu pour être déplacé dans une direction de déplacement au-dessus de la surface du sol à traiter,
le dispositif de couplage (13) comprenant un élément de couplage réglable en hauteur par rapport au châssis (3),
l'élément de couplage étant conçu comme une plaque de raccordement (15) s'étendant globalement parallèlement au plan défini par les roues (5),
la plaque de raccordement (15) comprenant une ouverture de passage (19), à partir de laquelle le manchon d'aspiration (11) s'étend en direction du châssis (3),
**caractérisée en ce que**
sur les bords latéraux de la plaque de raccordement (15), vus dans la direction de déplacement de la machine de nettoyage de sol (1), sont prévus des éléments d'emboîtement (21) pour un emboîtement avec la plaque de raccordement (35) du dispositif supplémentaire (31, 31', 31"),
le dispositif supplémentaire (31, 31', 31") peut être couplé avec la machine de nettoyage de sol (1) de façon à ce que la plaque de couplage (35) puisse être poussée sur la plaque de raccordement (15), l'ouverture de passage (19) et l'ouverture de raccordement (37) étant alors orientées l'une vers l'autre, de façon à ce que la poussée permette de relier le dispositif supplémentaire (31, 31', 31") directement avec le manchon d'aspiration (11).

2. Machine de nettoyage de sol selon la revendication 1, la dimension de la plaque de raccordement (15) dans la direction transversale se réduisant de l'extrémité avant, vue dans la direction de déplacement de la machine de nettoyage de sol (1), de la plaque de raccordement (15) vers l'arrière.

3. Machine de nettoyage de sol selon la revendication 2, la dimension de la plaque de raccordement (15) dans la direction transversale se réduit de manière linéaire à partir de l'extrémité avant de la plaque de raccordement (15) et est prolongée par une portion avec une largeur globalement constante.

4. Machine de nettoyage de sol selon la revendication 2 ou 3, des saillies de couplage (21) étant prévues en tant qu'éléments d'emboîtement, sur les bords, orientés vers l'extérieur, de la plaque de raccordement (15).

5. Machine de nettoyage de sol selon l'une des revendications 1 à 4, le dispositif de couplage (13) étant conçu de façon à ce que la plaque de raccordement (15) puisse être déplacée en hauteur par rapport au châssis (3) de façon à ce qu'elle s'étende indépendamment de la hauteur réglée, parallèlement au plan défini par les surfaces d'appui des roues (5).

6. Machine de nettoyage de sol selon la revendication 5, le dispositif de couplage (13) comprend au moins deux paires de nervures (17, 17') parallèles entre elles et perpendiculaires au plan défini par les surfaces d'appui des roues, disposées de manière décalée, dont une extrémité est reliée de manière pivotante avec le châssis (3) et l'autre extrémité est reliée de manière pivotante avec la plaque de raccordement (15).

7. Machine de nettoyage de sol selon la revendication 5 ou 6, le dispositif de couplage (13) comprenant des moyens de verrouillage de façon à ce que la plaque de raccordement (15) puisse être bloquée dans une position dans laquelle la plaque de raccordement (15) présente une distance maximale par rapport au plan défini par les surfaces d'appui des roues (5).

8. Machine de nettoyage de sol selon l'une des revendications 1 à 7, le manchon d'aspiration (11) étant relié avec le dispositif d'aspiration par l'intermédiaire d'une conduite d'aspiration flexible (9).

9. Machine de nettoyage de sol selon l'une des revendications 1 à 4, un dispositif de verrouillage (23) étant prévu sur la plaque de raccordement (15), qui comprend un verrou (25) coulissant perpendiculairement au plan de la plaque de raccordement (15).

10. Dispositif supplémentaire pour une machine de nettoyage de sol selon l'une des revendications 1 à 9, avec une plaque de couplage (35) s'étendant, lors du fonctionnement, parallèlement à une surface de sol à traiter,
le dispositif supplémentaire (31, 31', 31") étant conçu pour être déplacé dans une direction de déplacement au-dessus de la surface de sol à traiter,
la plaque de couplage (35) comprenant une ouverture de raccordement (37), la machine de nettoyage de sol (1) avec un châssis (3) avec des roues (5) étant conçue pour se déplacer au-dessus d'une surface de sol à traiter et comprenant un dispositif de couplage (13) pour le raccordement du dispositif supplémentaire (31, 31', 31") à la machine de nettoyage de sol (1),
le dispositif de couplage (13) comprenant un élément de couplage réglable en hauteur par rapport au châssis (3),
l'élément de couplage étant conçu comme une plaque de raccordement (15) s'étendant globalement parallèlement au plan défini par les roues (5),
la plaque de raccordement (15) comprenant une ouverture de passage (19) à partir de laquelle le manchon d'aspiration (11) s'étend en direction du châssis (3),
**caractérisé en ce que**
le dispositif supplémentaire (31, 31', 31") peut être couplé avec la machine de nettoyage de sol (1) de façon à ce que la plaque de couplage (35) puisse être poussée sur la plaque de raccordement (15), l'ouverture de passage (19) et l'ouverture de raccordement (37) étant ainsi orientées l'une vers l'autre de façon à ce que, la poussée permette de relier le dispositif supplémentaire (31, 31', 31") directement avec le manchon d'aspiration (11).

11. Dispositif supplémentaire selon la revendication 10, la dimension de la plaque de couplage (35) transversale par rapport à la direction de déplacement se réduisant, de l'extrémité avant (39), vue dans la direction de déplacement, de la plaque de couplage (35), vers l'arrière.

12. Dispositif supplémentaire selon la revendication 11, la dimension de la plaque de couplage (35) dans la direction transversale se réduisant de manière linéaire de l'extrémité avant de la plaque de couplage (35) et étant prolongée par une portion avec une largeur globalement constante.

13. Dispositif supplémentaire selon l'une des revendications 10 à 12, la plaque de couplage (35) comprenant, sur les bords qui s'étendant parallèlement à la direction de déplacement, des éléments de couplage (41) pour l'emboîtement avec une plaque de raccordement (15) sur la machine de nettoyage de sol (1).

14. Dispositif supplémentaire selon l'une des revendications 10 à 13, la plaque de couplage (35) comprenant un évidement (43) pour le logement d'un verrou (25).

15. Système de machine de nettoyage de sol comprenant une machine de nettoyage de sol selon l'une des revendications 1 à 9 et un dispositif supplémentaire selon l'une des revendications 10 à 14.
